Europäisches Patentamt

European Patent Office

Office européen des brevets

(11) Publication number: **0 424 889 A2**

# EUROPEAN PATENT APPLICATION

(21) Application number: 90120339.8

(22) Date of filing: 23.10.90

(51) Int. Cl.5: **G06F 12/06**

(30) Priority: 24.10.89 JP 274967/89

(43) Date of publication of application:
**02.05.91 Bulletin 91/18**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Sakai, Makoto, c/o Intellectual**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) **A memory management system for reallocating memory space based on data set in registers.**

(57) A part of a CPU address space is divided into a plurality of blocks, and registers (11) are provided for each of the divided blocks. The upper bits of location data in the CPU address data where the divided block is reallocated are set in the registers. The values set in the respective registers are compared with the address of predetermined number of bits from the CPU by the comparators (12). A coincidence signal is output to the selector 14 from the comparator where the coincidence is obtained. In response to the coincidence signal, the selector 14 outputs the upper bits of the corresponding address of the corresponding memory address space. The upper bits are combined with the lower bits of the address data from the CPU to be supplied to a memory (16) as a memory address.

F I G. 2

## A MEMORY MANAGEMENT SYSTEM FOR REALLOCATING MEMORY SPACE BASED ON DATA SET IN REGISTERS

The present invention relates to a memory management system adapted to a personal computer.

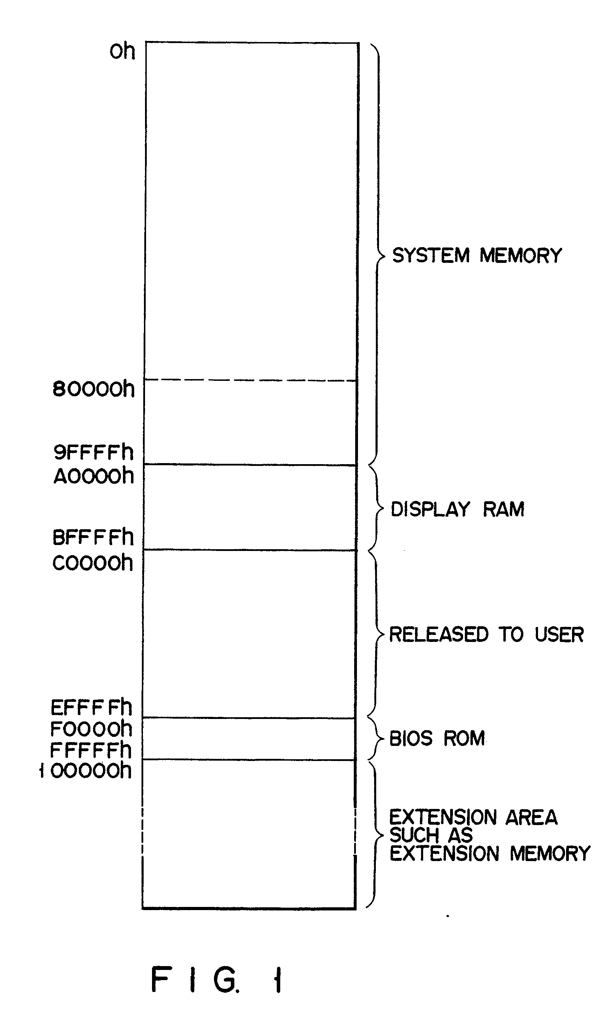

In a conventional personal computer, an address space managed by a CPU is comprised of a RAM area serving as a system memory, a ROM area storing a BIOS (basic input and output system) and the like, a video RAM area, and an area related to a user for allocating an extension memory. A conventional memory map is shown in Fig. 1. In Fig. 1, the system memory is allocated in addresses 0(h) through 9FFFF(h) (h represents a hexadecimal). The video RAM area is allocated in the address A0000(h) through BFFFF(h). A dedicated RAM which is independent of the system memory and is managed by a display circuit is allocated to the video RAM area. The addresses C0000(h) through EFFFF(h) are released to permit a user to mount an extension ROM or an interface with a peripheral unit. The BIOS-ROM is allocated in addresses F0000(h) through FFFFF(h). Further, the extension memory is allocated in the address 100000(h) or more.

Recently, the capacity of RAM is increased and a RAM of 1M (mega) bits or more has been used. For example, 8 1M-bit RAMs can constitute 1MB (mega byte) memory space.

An industrial standard machine usually supports a system memory address space of 640 Kbytes (or 512K bytes). The address space from 640 KB (512KB) to 1MB is assigned to the BIOS ROM and the video RAM. Accordingly, if the system memory ranging from 0(h) through 9FFFF(h) in the memory map described above is constituted by using the 1M-bit RAM, a memory capacity of 384 KB (512KB) ranging from A0000(h) through FFFFF-(h) is redundant. This redundant memory is usually reallocated in the address 100000(h) or more under the control of the address decoding conditions to thereby effectively use the redundant memory. Since the extension memory or the like may be allocated in the address 100000(h) or more, the control is required for avoiding the redundant memory being allocated overlapped with the extension memory.

In a conventional system, the memory size of the extension memory is limited to 1MB, 4MB, and 8MB. In accordance with the selection of 2MB, 4MB, and 8MB, the memory address to be reallocated is controlled by a logic circuit constituted by a gate array. Accordingly, the addresses to be reallocatable are preliminarily fixed, resulting in limited combinations of the extension memory size and the reallocation address.

Accordingly, the memory extension is limited to fixed combinations. Even if a new memory having a capacity other than that of the existing memories is developed in the near future, the logic circuit is not designed to take account of it. Thus, the new memory cannot be used as the extension memory.

If the capacity of the system memory is designed to be changeable, i.e., if the system memory is allocated in the addresses from 0(h) through 7FFFF(h), the memory of 512KB becomes redundant. In this case, the address control of further 128KB (512KB-384KB) in addition to 384KB must be controlled by the hardware logic.

The more flexible a memory arrangement or a memory allocation, the more sophisticated the hardware arrangement. More specifically, the memory arrangement and the hardware arrangement can only be selected from the combinations preliminarily determined by the hardware.

An object of the present invention is to provide a memory management system in which a part of a CPU address space is reallocatable in an arbitrary location of the CPU address space.

In order to achieve the above object, a memory management system according to the present invention comprises: means, provided for each divided blocks of a logical address space, for storing data indicating location where the block is reallocated; means for setting, in said storage means, an arbitrary location data in the logical address space; and allocating means for allocating the corresponding block in a physical address space based on the location data set in said storage means.

According to the present invention, a part of the CPU address space (a logical address space) is divided into a plurality of blocks. Registers are provided to the divided blocks in one-to-one correspondence. Arbitrary location addresses in the CPU address space where the blocks are to be reallocated in a memory address space (physical address space) based on the location data reallocated in the CPU address space. Accordingly, size of the extension memory is not constrained. Further, the size of the system memory can be arbitrary set by setting adequate reallocation data in the registers. A logic circuit must not be preliminarily designed taking account of the effective arrangement of the extension memory and the size of the system memory.

This invention can be more fully understood from the following detailed description when taken in conjunction with the accompanying drawings, in which:

Fig. 1 is a conventional memory map illustrating an example of an address space viewed from a CPU;

Fig. 2 is a block diagram showing an example of a memory management system of the present invention;

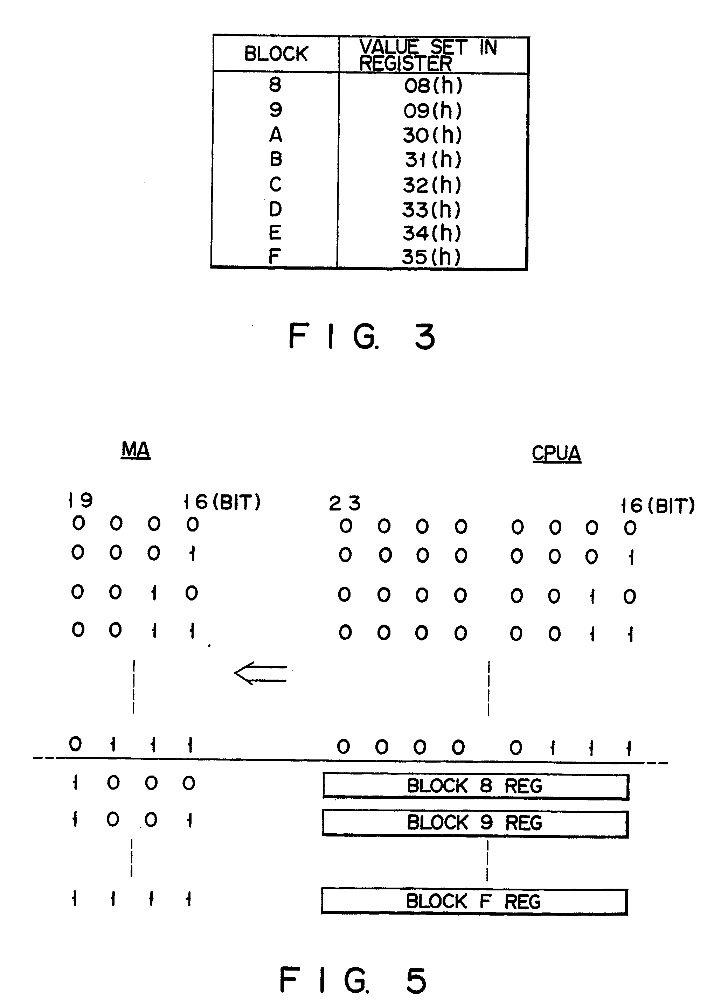

Fig. 3 is a table indicating addresses in the CPU address space to be set in the registers;

Fig. 4 is a memory map after a part of the address space viewed from a CPU is reallocated in the CPU address space; and

Fig. 5 is a conceptual view showing a conversion from a CPU address (logical address) to a memory address (physical address).

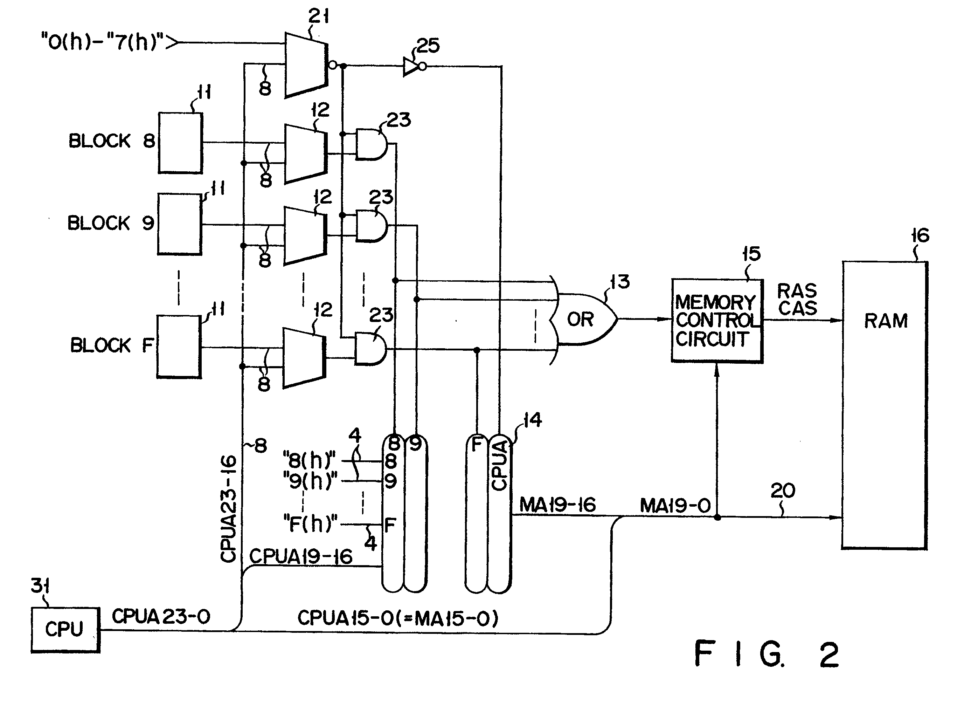

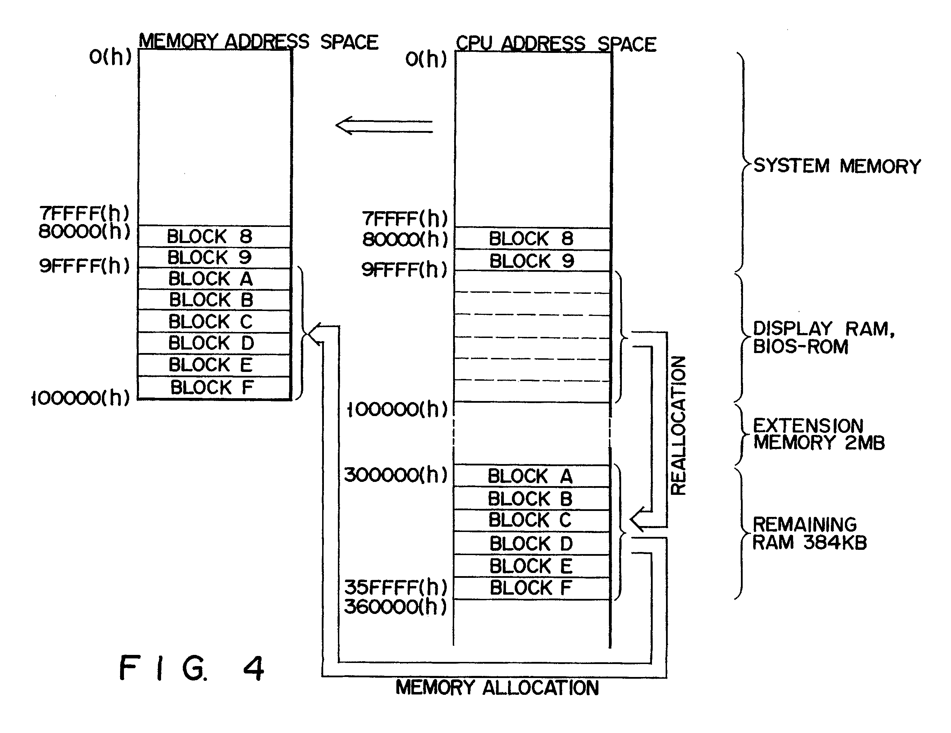

Fig. 2 is a block diagram showing an embodiment of a memory management system according to the present invention. In this embodiment, the size of a memory (RAM) 16 is 1MB (mega bytes) and a first 512KB memory is unconditionally assigned to the CPU addresses 0(h) through 7FFFF-(h). The remaining 512KB memory is divided into 8 blocks (block 8, block 9, ..., block F) each having 64KB memory capacity. (see Fig. 4) Accordingly, the 20-bit memory address is enough to access the memory 16. Registers 11 are provided for each block in one-to-one correspondence. The respective registers store data indicating locations where the corresponding blocks (a part of the CPU address space, i.e., a logical address space) are to be reallocated in the CPU address space. The location data is set by an initialize routine in the BIOS, for example.

In this embodiment, the CPU 31 is comprised of a 32-bit microprocessor 80386SX manufactured by an Intel. Corp., U.S.A. In this case, the address output from the CPU 31 is a 24-bit data. On the other hand, the memory address space is 1MB, the memory address is a 20 bit data. Accordingly, when the CPU address is converted into the memory address, the lower 16 bits of the CPU address are same as those of the memory address. Therefore, the upper 8 bits of the CPU address are converted into the upper 4 bits of the memory address. Accordingly, the upper 8 bits (bit 16 through bit 23) of the address data (24 bits) for reallocating the divided block into an arbitrary location in the CPU address space, are set in the registers 11, individually. For example, as shown in Fig. 4, when the blocks 8 and 9 are reallocated in "80000"(h) through "9FFFF"(h) in the CPU address space and the blocks A through F are reallocated in "300000"(h) through "35FFFF"(h), "08"(h), "09"-(h), "30"(h), "31"(h), "32"(h), "33"(h), "34"(h), and "35"(h) are set in the registers 11, respectively corresponding to the blocks 8 through F.

The outputs of the respective registers 11 are supplied to the respective one input terminals of the comparators 12, and the upper 8 bits of the address data output from the CPU 31 is supplied to the other terminal of each of the comparator 12. The comparator 12 compare the upper 8 bits from the CPU 31 with the upper 8 bits from the registers 11. When a coincidence is obtained from any one of the comparators 12, it outputs a logic "1" signal. The output signals from the comparators 12 are supplied to the one input terminals of the AND gates 23. Further, an output signal of a comparator 21 is supplied to the other terminal of each of the AND gate 23. The comparator 21 detects whether the address of the upper 8 bits supplied from the CPU 31 coincides with the address of the system memory, i.e., "00"(h) through "07"(h). Upon detecting the coincidence, the comparator 21 outputs the logic "0" signal to the AND gate 23 and logic "1" signal to a selector 14. Accordingly, when the upper 8 bits of "00"(h) through "07"(h) of the CPU addresses "0"(h) through "7FFFF"(h) are set in the register 11, the coincidence signal of logic "1" output from the comparator 12 is gated by the AND gate 23.

The respective outputs from the AND gate 23 are supplied to the selector 14 as well as to an OR gate 13. The upper 4 bits ("8"(h) through "F"(h)) of the memory address space ("80000"(h) through "FFFFF"(h) excluding "0"(h) through "7FFFF"(h)) are fixedly supplied to the selector 14. Furthermore, the four bits of bit 16 through bit 19 among the address output from the CPU 31 are supplied to the selector 14. In response to the logic "1" signal from the comparator 21, the selector 14 outputs the bits 16 through 19 of the CPU address. When the logic "1" signal is output from the AND gate 23 of the block 8, the selector 14 outputs the upper 4 bits ("8"(h)) of the memory address. When the logic "1" signal is output from the AND gate 23 of the block 9, the selector 14 outputs the upper 4 bits "9"(h) of the memory address. Similarly, when the logic "1" signal is output from the AND gates 23 of the blocks A through F, the selector 14 outputs the upper 4 bits of "A"(h) through "F"(h). The upper 4 bits output from the selector 14 is combined with the lower 16 bits (bit 0 through bit 15) supplied from the CPU 31 to be supplied to the RAM 16 as well as the memory controller 15 as the 20-bit memory address. Accordingly, when the address output from the CPU 31 indicates any one of the blocks 0 through 7 in the CPU address space, the selector 14 directly, outputs the CPU address as the memory address. Further, when the address output from the CPU 31 indicates the blocks any one of the blocks 8 through F in the CPU address space, the selector 14 outputs the corresponding 4 bits of "A0000"(h) through "100000"(h) in the memory address space. The concept of converting the CPU address into the memory address is shown in Fig. 5.

The output signal from the OR gate 12 is further supplied to the memory controller 15. The OR gate outputs data to the memory controller 15 indicating that any one of the blocks "8" through "F" is accessed by the CPU 31. Based on the output signal from the OR gate 13 and the memory address from the selector 14, the memory controller 15 which has been known outputs memory control signals such as an address strobe signal (RAS), and a column address strobe signal (CAS).

An operation of the memory management system according to the present invention constructed as above will now be described.

First, in the initialize routine of BIOS, the different addresses where the 8 divided blocks from block 8 through block F are to be reallocated in the CPU address space are set in the registers 11. In this embodiment, the system memory has 512KB in size and no other memories such as the video RAM and the BIOS ROM are allocated in the 128KB memory space ranging from 512KB to 640KB. Accordingly, blocks 8 and 9 are reallocated in the addresses "80000"(h) through "9FFFF"(h) in the CPU address space. Further, the upper 8-bit data of "08"(h) and "09"(h) are set in the corresponding registers 11. The blocks A through F ranging from the addresses "A0000"(h) through "100000"(h) in the CPU address space are reallocated in the addresses "300000"(h) through "35FFFF"(h). Accordingly, "30"(h), "31"(h), "32"-(h), "33"(h), "34"(h), and "35"(h) are set in the corresponding registers 11, respectively.

When the system memory address (CPUA23-0) in the CPU address space is output from the CPU 31, the upper 8 bits of the address are supplied to the one input terminal of the comparator 21. Furthermore, the upper 4 bits ("0"(h) through "7"(h)) of the system memory address are fixedly supplied to the other input terminal of the comparator 21. Accordingly, the coincidence signal is output from the comparator 21, inverted by an inverter 25, and then supplied to the selector 14 as logic "1" signal. As a result, the bits 19-16 are combined with the lower 16 bits (CPUA15-0) output from the CPU 31 and supplied to the RAM 16 as the memory address (MA19-0). As a result, the location in the RAM 16 designated by the memory address is accessed under the control of the memory controller 15.

On the other hand, when any one of the addresses ranging from "80000"(h) to "9FFFF"(h) and "300000"(h) to "35FFFF"(h) is output, the upper 8 bits thereof are output to the comparator 21 and the corresponding comparator 12. In this case, the logic "1" signal from the comparator 21 is inverted to logic "0" by the inverter 25 and then supplied to the selector 14. Further, the coincidence signal of logic "1" signal from the corresponding comparator 12 is output to the selector 14. In response to the coincidence signal, the selector 14 outputs the upper four bits (MA19-16) of the corresponding memory address. For example, when the address "300000"(h) is output from the CPU 31, the upper 8 bits "30"(h) thereof is compared with the "30"(h) from the corresponding register 11 by the corresponding comparator 12. As a result, the coincidence signal is supplied to the selector 14 from the corresponding comparator 12. Accordingly, the upper 4 bits "8"(h) of the memory address is output from the selector 14. This address (MA19-16) is combined with the address (CPUA 15-0) output from the CPU 31 and then supplied to the RAM 16 as the 20-bit memory address. Thus, the location designated by the memory address is accessed under the control of the control signals from the memory controller 15.

The present invention is not limited to the above embodiment. For example, the address ranging from "0"(h) through "7FFFF"(h) is fixedly used as the system memory. However, the above address range may be blocked if necessary. Further, the address range of the system memory is compared by the comparator 21. However, a flip-flop (flag) may be set and the output thereof may be supplied to the selector 14.

## Claims

1. A memory management system, comprising:
means (11), provided for each divided blocks of a logical address space, for storing data indicating locations where the block is reallocated;
means (31) for setting, in said storage means, an arbitrary location data in the logical address space; and allocating means (13, 14, 25, 27, 15) for allocating the corresponding block in a physical address space based on the location data set in said storage means.

2. The system according to claim 1, characterized in that said storage means is provided for each of the blocks, the different values being set in the storage means.

3. The system according to claim 2, characterized in that said allocating means includes, corresponding to the respective storage means for comparing predetermined number of bits of an address supplied from a central processing unit (CPU) with the value set in the register, outputs, upon coincidence is obtained by any one of the comparing means, address data within the physical address space corresponding to location in the logical address space set in the corresponding storage means, and supplies the address data to a memory address of predetermined bits supplied from the CPU as the memory address.

4. The system according to claim 1, characterized in that the physical address space is expanded by an extension memory of an arbitrary size.

5. The system according to claim 1, characterized by further comprising means for dividing into a plurality of blocks the remaining physical address space excluding the logical address space used as the system memory among the logical address space.

6. The system according to claim 1, characterized in that the setting of the location data into the storage means is performed by a program.

7. The system according to claim 1, characterized in that the logical address is a CPU address and the physical address is a memory address space.

| | |
|---|---|
| 0h | SYSTEM MEMORY |
| 80000h | |
| 9FFFFh | |
| A0000h | DISPLAY RAM |
| BFFFFh | |
| C0000h | RELEASED TO USER |
| EFFFFh | |
| F0000h | BIOS ROM |
| FFFFFh | |
| 100000h | EXTENSION AREA SUCH AS EXTENSION MEMORY |

F I G. 1

F I G. 2

| BLOCK | VALUE SET IN REGISTER |
|:-----:|:---------------------:|
| 8 | 08(h) |
| 9 | 09(h) |
| A | 30(h) |
| B | 31(h) |
| C | 32(h) |
| D | 33(h) |
| E | 34(h) |
| F | 35(h) |

F I G. 3

MA                                          CPUA

| 19 | | | 16(BIT) | 23 | | | | | | | 16(BIT) |
|----|---|---|---------|----|---|---|---|---|---|---|---------|
| 0 | 0 | 0 | 0 | 0 | 0 | 0 | 0 | 0 | 0 | 0 | 0 |
| 0 | 0 | 0 | 1 | 0 | 0 | 0 | 0 | 0 | 0 | 0 | 1 |
| 0 | 0 | 1 | 0 | 0 | 0 | 0 | 0 | 0 | 0 | 1 | 0 |
| 0 | 0 | 1 | 1 | 0 | 0 | 0 | 0 | 0 | 0 | 1 | 1 |

⟸

| 0 | 1 | 1 | 1 | 0 | 0 | 0 | 0 | 0 | 1 | 1 | 1 |

| 1 | 0 | 0 | 0 |  BLOCK 8 REG |
| 1 | 0 | 0 | 1 |  BLOCK 9 REG |
| 1 | 1 | 1 | 1 |  BLOCK F REG |

F I G. 5

8

FIG. 4

MEMORY ADDRESS SPACE

0(h)

7FFFF(h)
80000(h) BLOCK 8
9FFFF(h) BLOCK 9
BLOCK A
BLOCK B
BLOCK C
BLOCK D
BLOCK E
100000(h) BLOCK F

CPU ADDRESS SPACE

0(h)

7FFFF(h)
80000(h) BLOCK 8
9FFFF(h) BLOCK 9

100000(h)

300000(h) BLOCK A
BLOCK B
BLOCK C
BLOCK D
BLOCK E
35FFFF(h) BLOCK F
360000(h)

REALLOCATION

MEMORY ALLOCATION

SYSTEM MEMORY

DISPLAY RAM, BIOS-ROM

EXTENSION MEMORY 2MB

REMAINING RAM 384KB

EP 0 424 889 A2